(19) Europäisches Patentamt
European Patent Office
Office européen des brevets

(11) Numéro de publication : **0 004 230**
**B1**

(12) **FASCICULE DE BREVET EUROPÉEN**

(45) Date de publication du fascicule du brevet :
07.04.82

(21) Numéro de dépôt : **79400128.9**

(22) Date de dépôt : **01.03.79**

(51) Int. Cl.³ : **B 62 D 37/04**, B 62 D 9/02

(54) **Dispositif de commande et de contrôle de l'inclinaison de la caisse d'un véhicule.**

(30) Priorité : 02.03.78 FR 7805978

(43) Date de publication de la demande :
19.09.79 (Bulletin 79/19)

(45) Mention de la délivrance du brevet :
07.04.82 Bulletin 82/14

(84) Etats contractants désignés :
**BE DE FR GB IT NL**

(56) Documents cités :
BE - A - 496 016
DE - B - 1 146 381
FR - A - 1 562 248
FR - A - 2 031 813
FR - A - 2 154 972
FR - A - 2 277 261
US - A - 2 815 960

(73) Titulaire : **Patin, Pierre**
**16 boulevard de l'Hôpital**
**F-75005 Paris (FR)**

(72) Inventeur : **Patin, Pierre**
**16 boulevard de l'Hôpital**
**F-75005 Paris (FR)**

(74) Mandataire : **Le Brusque, Maurice et al**
**CREUSOT-LOIRE 15 rue Pasquier**
**F-75383 Paris Cedex 08 (FR)**

Imprimerie Jouve, 18, rue St-Denis, 75001 Paris, France

## Dispositif de commande et de contrôle de l'inclinaison de la caisse d'un véhicule

L'invention a pour objet un dispositif de commande et de contrôle de l'inclinaison de la caisse d'un véhicule monté sur au moins un train roulant sur lequel la caisse est articulée autour d'un axe sensiblement horizontal et placé dans le plan médian de celle-ci.

L'invention s'applique spécialement, mais de manière non limitative, aux véhicules légers à trois roues du type décrit dans le brevet FR-A-1.562.248.

Dans ce brevet on a décrit un véhicule à trois roues comportant une roue avant directrice et un essieu arrière sur lesquels est articulée la caisse du véhicule de telle sorte que celle-ci puisse s'incliner d'un côté ou de l'autre du plan de symétrie de l'essieu. Grâce à cette disposition, le véhicule est stable à l'arrêt, l'articulation étant alors bloquée, ce qui permet de le carrosser pour protéger le conducteur. Mais, en marche, l'articulation se débloque de façon que le véhicule puisse se comporter comme un véhicule à deux roues qui permet au conducteur, pour compenser l'effet de la force centrifuge, d'incliner la caisse vers l'intérieur de la courbe jusqu'à ce que le plan médian passant par le centre de gravité soit dirigé selon la direction de la verticale apparente, c'est-à-dire de la résultante de la pesanteur et de la force centrifuge.

Cependant, on ne peut compter uniquement sur le sens de l'équilibre du conducteur surtout si le véhicule est carrossé et, par sécurité, il est utile de disposer d'un moyen permettant de maintenir la caisse du véhicule selon la bonne inclinaison. Dans le brevet FR-A-1.562.248 et son addition FR-A-2.031.813, on a décrit un certain nombre de moyens permettant de bloquer l'articulation de la caisse lorsque le plan médian de celle-ci tend à s'écarter de la direction de la verticale apparente. Dans le brevet déjà cité, les différents moyens de contrôle du maintien de l'inclinaison de la caisse sont commandés par une masse pendulaire constituée soit d'un pendule articulé sur la caisse soit d'une masse roulante, par exemple une bille susceptible de se déplacer sur une cuvette en forme de surface cylindrique d'axe parallèle à celui de l'articulation.

Dans ces véhicules, la stabilité dépend évidemment du sens de l'équilibre du conducteur. Or celui-ci dépend des personnes et peut d'autre part être perturbé par le fait que le véhicule est carrossé et a donc un poids nécessairement plus élevé que celui des véhicules à deux roues classiques, et que par ailleurs il est plus sensible au vent latéral.

Dans le cas de véhicules carrossés, on a déjà proposé dans le brevet US-A-2 815 960, d'incliner la caisse vers l'intérieur du virage au moyen d'un dispositif mécanique. Cependant, ce dispositif qui n'est d'ailleurs pas prévu explicitement pour des véhicules légers à trois roues articulées autour d'un axe horizontal, est commandé par des moyens séparés tenant compte l'un de la vitesse du véhicule et l'autre de l'orientation de l'organe de direction. Compte tenu des frottements et des inerties on ne peut être certain qu'un tel dispositif traduise exactement et immédiatement la valeur de la force centrifuge.

L'invention a pour objet, au contraire, un dispositif permettant de réagir instantanément aux effets de la force centrifuge grâce à l'utilisation d'une masse pendulaire commandant directement et selon son sens de déplacement, l'embrayage dans un sens ou dans l'autre du mécanisme de basculement avec l'arbre moteur de telle sorte que l'inclinaison de la caisse suive à tout moment les mouvements de la masse pendulaire.

Le dispositif selon l'invention comprend des moyens de basculement et de maintien de l'inclinaison de la caisse commandés par un arbre moteur entraîné en rotation par les moyens de déplacement du véhicule et comprenant un mécanisme de basculement susceptible d'être entraîné dans deux sens opposés par ledit arbre moteur au moyen de l'un ou l'autre de deux moyens d'accouplement à embrayage progressif pour la commande de basculement chacun dans un sens et un moyen de commande de l'embrayage progressif de l'un ou l'autre desdits moyens d'accouplement sous l'action de la masse pendulaire, l'écartement de celle-ci d'un côté ou de l'autre du plan passant par son axe d'oscillation et parallèle au plan médian de la caisse, commandant l'embrayage progressif de celui des deux moyens d'accouplement déterminant le basculement de la caisse dans le sens permettant de ramener le plan médian de celle-ci dans la direction de la verticale apparente passant entre l'axe d'oscillation et le centre de gravité de la masse pendulaire.

Dans un mode de réalisation préférentiel, l'arbre moteur est relié au mécanisme de basculement par l'intermédiaire d'un moyen de démultiplication. De préférence, les deux accouplements à embrayage progressif sont calés sur un arbre secondaire de liaison entre l'arbre moteur et le mécanisme de basculement, lesdits accouplements étant susceptibles d'entraîner l'arbre secondaire dans deux sens de rotation opposés qui correspondent chacun à un sens de basculement.

Le moyen de commande de l'embrayage progressif de l'un ou de l'autre des accouplements comprend avantageusement un levier articulé à une extrémité sur la masse pendulaire sensiblement au centre de gravité de celle-ci et à l'autre extrémité sur un axe solidaire de la caisse et placé à la verticale dudit centre de gravité lorsque la masse pendulaire est au repos, ledit levier commandant l'embrayage de l'un ou de l'autre des moyens d'accouplement par l'intermédiaire d'un système multiplicateur d'efforts.

D'autre part, dans un mode de réalisation plus perfectionné, le dispositif de commande d'inclinaison comprend un moyen de commande anticipée de l'écartement de la masse pendulaire d'un côté ou de l'autre du plan médian, susceptible d'être actionné par le conducteur du véhicule avant que la masse pendulaire ne soit soumise à l'effet de la force centrifuge.

On connaît déjà certains dispositifs dans lesquels le déplacement d'une masse pendulaire commande l'inclinaison de la caisse d'un véhicule. De tels dispositifs sont utilisés en particulier dans les véhicules ferroviaires du fait qu'il n'est pas possible de donner aux voies de chemin de fer un dévers suffisant pour compenser totalement l'effet de la force centrifuge dans les courbes compte tenu de la vitesse des véhicules. Cependant, dans les dispositifs connus, la masse pendulaire ne commande pas directement l'inclinaison du véhicule mais agit sur des servomoteurs pneumatiques, hydrauliques, électriques ou électromécaniques par l'intermédiaire de dispositifs de commande tels que vannes, tiroirs, soupapes, électro-vannes ou contacts électriques ; l'ensemble de ces dispositifs de commande a un temps de réponse non négligeable et/ou une courbe de réponse souvent non linéaire. De plus, ces dispositifs agissent souvent par tout ou rien ce qui présente des inconvénients évidents.

Dans le dispositif selon l'invention, au contraire, on utilise directement la force centrifuge s'exerçant sur la masse pendulaire pour commander l'orientation de la caisse. L'effort de basculement est fourni par un arbre moteur qui est entraîné par les moyens de déplacement du véhicule. On utilise ainsi le fait que tout véhicule en mouvement peut disposer d'une prise de mouvement à grande vitesse soit directement sur le moteur soit sur la transmission entre le moteur et l'essieu de façon à utiliser l'énergie cinétique du moteur ou du véhicule en déplacement. Cet arbre est entraîné normalement dans un sens uniforme mais peut commander les moyens d'inclinaison dans un sens ou dans l'autre grâce à deux accouplements débrayables et l'effort d'embrayage est fourni par la masse pendulaire, éventuellement par l'intermédiaire d'un dispositif de leviers. On peut de la sorte, grâce à la progressivité de l'embrayage, fournir un effort de basculement de la caisse proportionnel à l'écartement de la masse pendulaire. D'autre part, l'arbre moteur fournit un couple relativement faible à la vitesse de rotation élevée qui peut être transformé, grâce à une forte démultiplication, en un couple élevé à faible vitesse de rotation susceptible de commander le basculement de la caisse dans de bonnes conditions.

L'invention va maintenant être décrite en se référant à plusieurs modes de réalisation particuliers donnés à titre d'exemples et représentés sur les dessins annexés.

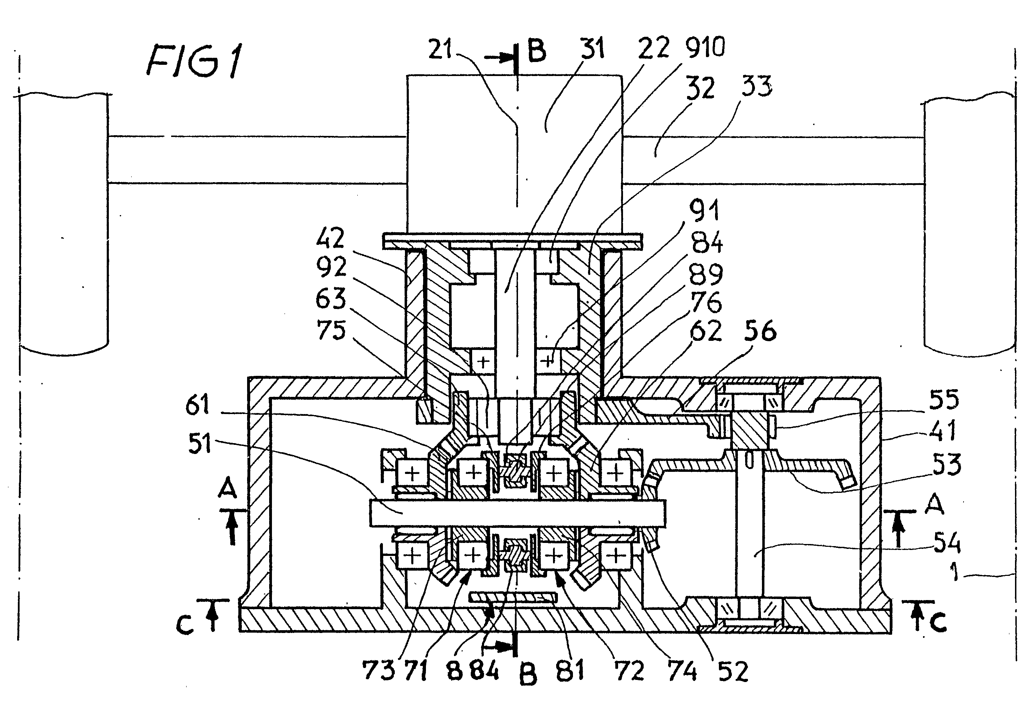

La figure 1 est une coupe du dispositif selon un plan horizontal passant par l'axe d'articulation de la caisse sur le train roulant.

La figure 2 est une coupe selon un plan de coupe vertical perpendiculaire à l'axe d'articulation et repéré A-A sur la figure 1.

La figure 3 est une coupe selon un plan de coupe vertical passant par l'axe d'articulation et repéré B-B sur les figures 1 et 2.

La figure 4 est une coupe partielle, selon un plan de coupe C-C de la figure 1, qui montre l'ensemble de leviers associé à la masse pendulaire.

La figure 5 est une coupe semblable à la figure 2 et qui représentent le dispositif lorsque la caisse est inclinée.

La figure 6 représente, en coupe partielle selon l'axe de l'arbre secondaire, un mode de réalisation des accouplements débrayables commandés par des embrayages à poudre magnétique.

La figure 7 représente schématiquement, en coupe transversale perpendiculaire à l'axe d'arti-culation, un dispositif de commande plus perfectionné.

La figure 8 représente schématiquement un autre perfectionnement de l'invention.

Le dispositif selon l'invention est destiné plus spécialement, comme on l'a indiqué, à un véhicule stabilisé à trois roues du type décrit dans le brevet 1.562.248. Un tel véhicule comporte une caisse 1 articulée autour d'un axe 21 sur le train roulant qui la supporte. Le train roulant comporte un châssis 31 qui est supporté par l'essieu 32 ou tout dispositif équivalent à un essieu, bogie ou bissel, roues indépendantes etc, l'axe de l'essieu pouvant être fictif.

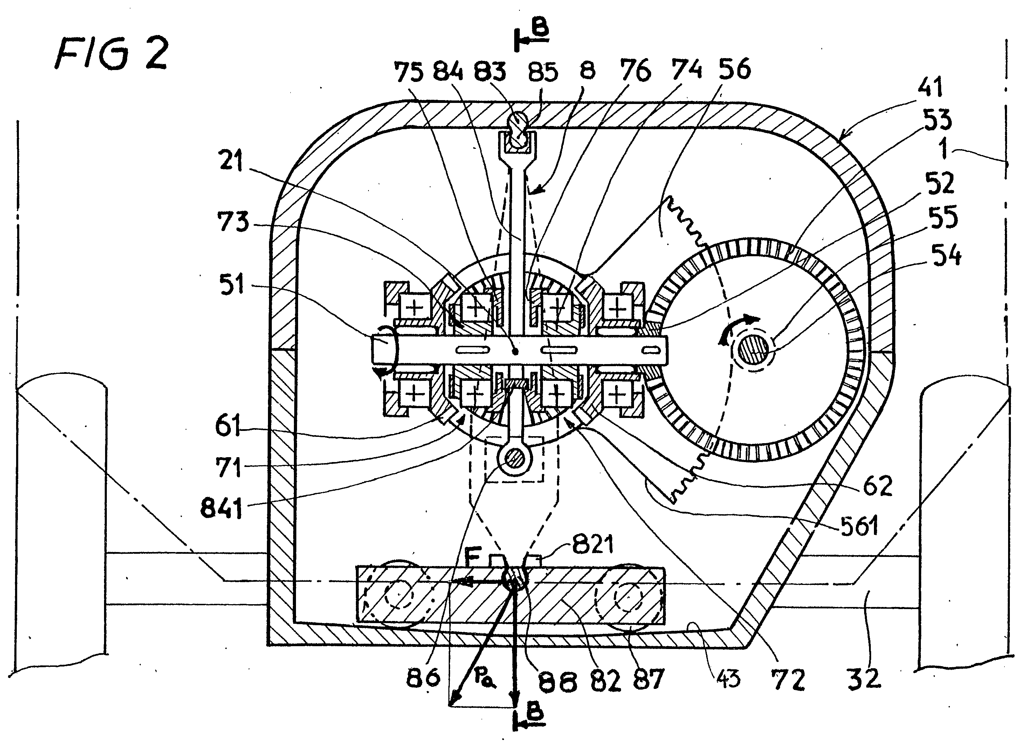

La caisse 1, représentée schématiquement en traits mixtes sur la figure 2, est solidaire d'un carter 41 qui est guidé en rotation autour de l'axe 21 par rapport au châssis 31 et qui est immobilisé longitudinalement sur cet axe. A cet effet, le carter 41 est solidaire d'un manchon 42 qui comporte une portée intérieure cylindrique coopérant avec une portée extérieure cylindrique solidaire du châssis 31.

Selon l'invention, le basculement de la caisse est commandé par un arbre moteur 22 qui est entraîné à grande vitesse et dans un sens uniforme soit directement par le moteur non représenté soit par l'essieu 32, par exemple au moyen d'un dispositif de transmission de mouvements qui pourrait être placé dans le châssis 31. L'arbre 22 est porté par un palier 91 monté sur une pièce 33 prolongeant le châssis 31 et sur laquelle est ménagée la portée cylindrique de support du manchon 42.

Le basculement de la caisse est commandé par un mécanisme qui, dans l'exemple représenté est constitué d'un pignon 55 porté par un axe 54 monté sur le carter 41 et entraîné par l'arbre moteur 22, dans un sens ou dans l'autre de basculement, par l'intermédiaire d'un système de démultiplication et de deux accouplements débrayables, ledit pignon 55 étant en prise avec un engrenage 56 solidaire du châssis 31.

Comme on le voit sur la figure 2, l'engrenage 56 peut être constitué simplement d'un secteur denté ouvert d'un angle supérieur au double de l'angle maximum d'inclinaison de la caisse et engrenant, dans son plan de symétrie, avec le pignon 55 susceptible d'être entraîné dans les deux sens de rotation par l'arbre moteur 22 par l'intermédiaire du système de démultiplication. Ce dernier est constitué d'un ensemble d'engrenages et, dans l'exemple représenté sur les figures, le pignon 55 est monté sur un arbre 54, parallèle à l'arbre 22, sur lequel est calé un engrenage 53 à denture conique qui engrène avec un pignon correspondant 52 monté à l'extrémité d'un arbre secondaire 51 monté dans le carter 41 et orthogonal à l'arbre 22.

L'arbre secondaire 51 est entraîné par l'arbre moteur 22 dans les deux sens de rotation par l'intermédiaire de deux accouplements débrayables, ce qui lui permet, comme on le voit, de commander la rotation du pignon 55 dans un sens ou dans l'autre et par conséquent le basculement de la caisse d'un côté ou de l'autre du plan médian.

Les deux accouplements débrayables 71 et 72 sont placés de part et d'autre du centre de l'arbre secondaire 51. Chaque accouplement 71 (72) est constitué d'un pignon 61 (62) monté fou à une extrémité de l'arbre 51 et muni d'une garniture de friction qui peut coopérer avec un plateau d'embrayage 73 (74) qui est lié en rotation avec l'arbre secondaire 51 par exemple au moyen de cannelures lui permettant de se déplacer axialement le long dudit arbre.

Les deux pignons 61 et 62 sont montés sur des paliers portés par le carter 41 et engrènent de part et d'autre d'un pignon 63 entraîné en rotation par l'arbre 22 de telle sorte que les deux pignons 61 et 62 tournent dans des sens opposés. Il apparaît donc que, en commandant l'embrayage de l'un ou l'autre des plateaux 73 et 74 avec le pignon correspondant 61 ou 62, on permet à l'arbre moteur 22 d'entraîner l'arbre secondaire 51 dans un sens ou l'autre de rotation. Au repos, les embrayages 73 et 74 étant débrayés, le mouvement de rotation de l'arbre moteur 22 n'est pas transmis à l'arbre secondaire 51.

Selon l'invention, l'embrayage de l'un ou l'autre des deux accouplements débrayables 71, 72 est commandé directement par l'écartement de la masse pendulaire d'un côté ou de l'autre du plan médian. Ainsi, l'effort d'embrayage est proportionnel à l'écartement de la masse pendulaire et par conséquent à l'action de basculement nécessaire pour compenser la force centrifuge.

Il est préférable de ne pas donner à la masse pendulaire le poids suffisant pour fournir directement l'effort d'embrayage nécessaire pour ne pas risquer d'alourdir inutilement le véhicule. C'est pourquoi, selon l'invention, on utilise un système multiplicateur d'efforts qui est représenté schématiquement sur les figures.

Pour augmenter la sensibilité de la masse pendulaire, on a intérêt à placer l'axe d'oscillation de celle-ci aussi loin que possible de son centre de gravité. A cet effet, on utilise un axe d'oscillation fictif, la masse pendulaire 82 roulant au moyen de galets 87 sur une surface cylindrique de grand rayon 43 ménagée dans le fond du carter 41 et dont l'axe est placé de préférence dans le plan médian du châssis 1.

Le déplacement de la masse pendulaire 82 est transformé en un effort d'embrayage de l'un ou l'autre des accouplements débrayables par un ensemble de leviers 8 à grand rapport de multiplication. En effet, la masse pendulaire est articulée, sensiblement en son centre de gravité à l'extrémité d'un levier primaire 81 qui, à son autre extrémité, est articulé sur la partie supérieure du carter 41 autour d'un axe 83 parallèle à l'axe d'articulation 21 et placé dans le plan médian de la caisse. Le levier primaire 81 porte également un axe d'articulation 85 placé à une faible distance de l'axe 83 et parallèle à celui-ci, et autour duquel est articulée l'extrémité supérieure d'un levier secondaire 84 qui passe entre les deux plateaux d'embrayage 73 et 74 et dont l'extrémité inférieure est articulée sur le carter 41 autour d'un axe 86 parallèle à l'axe d'articulation 21 et placé dans le plan médian de la caisse de l'autre côté de l'arbre secondaire 51 par rapport à l'axe 85 et passant dans une lumière ménagée sur le levier 81. De préférence, le levier secondaire 84 se compose de deux branches passant de part et d'autre de l'arbre secondaire 51.

Comme on le voit sur la figure 2, lorsque la caisse 1 et par conséquent le carter 41 sont orientés suivant la direction de la verticale apparente, le centre de gravité de la masse 82 se trouvant alors dans le plan médian de la caisse, les axes 83, 85, 86 et 88 sont alignés dans ledit plan médian. Le levier 84 est alors placé dans le plan de symétrie de l'arbre secondaire 51, à égale distance des deux plateaux d'embrayage 73 et 74.

En revanche, lorsque le véhicule entre dans une courbe, la masse 82 est soumise à un effort latéral F dû à l'effet de la force centrifuge et l'axe 88 se déplace donc vers la gauche sur la figure en entraînant le levier primaire 81 et par conséquent l'axe 85 qui commande lui-même le déplacement dans le même sens du levier secondaire 84 autour de l'axe 86. Le levier secondaire 84 va donc s'appuyer sur le plateau d'embrayage placé du côté vers lequel il se déplace (73 sur la figure) et le plateau, en se déplaçant axialement le long de l'arbre 51 s'appliquera contre le voile du pignon correspondant (61) entraîné en rotation par l'arbre 22. L'arbre secondaire 51 est alors entraîné en rotation dans le même sens que le pignon embrayé. Ainsi, même si la masse pendulaire a un poids relativement réduit, son déplacement, grâce à l'effet des différents bras de leviers de l'ensemble 8 détermine un effort d'embrayage important, proportionnel au déplacement de la masse pendulaire, et qui, surtout, s'exerce progressivement au fur et à mesure de l'entrée en courbe.

Bien entendu, l'écartement des leviers provoque de légères variations de distance entre les différents axes 83, 85 et 86 mais celles-ci peuvent être facilement absorbées par les jeux des articulations.

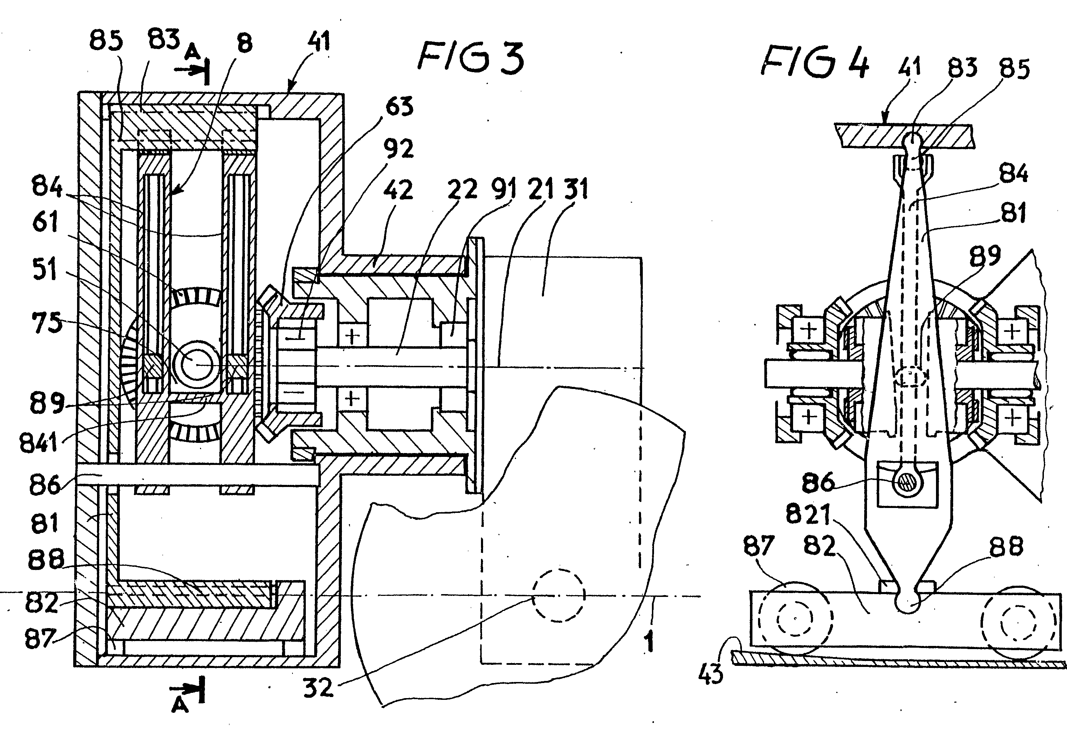

En outre, le levier secondaire 84 s'appuie avantageusement sur les deux plateaux d'embrayage par l'intermédiaire de deux manchons 75, 76 munis d'un système à rattrapage de jeux. En effet, comme on le voit sur les figures 3 et 4, le levier secondaire 84 est muni de deux masselottes 89 montées coulissantes longitudinalement chacune sur l'une des branches du levier et qui, sous l'action de leur poids, s'applique entre deux faces inclinées ménagées sur les deux manchons 75, 76 et formant un V ouvert vers le haut. Les manchons 75 et 76 s'appuient sur les plateaux 73 et 74 par l'intermédiaire de roulements et ils sont empêchés de tourner par une traverse 841 reliant entre elles les deux branches du levier 84 et sur laquelle s'appuient des redans solidaires des manchons.

Les deux masselottes 89 ont ainsi pour effet, grâce à leur poids propre, de rattraper tous les jeux et exercent en permanence un effort très léger d'approche des plateaux d'embrayage ce qui permet d'obtenir du mécanisme un temps de réponse pratiquement nul, le levier 84 étant prêt à commander le coulissement de l'un des plateaux d'embrayage dès que la masse pendulaire 82 s'écarte d'un côté ou de l'autre.

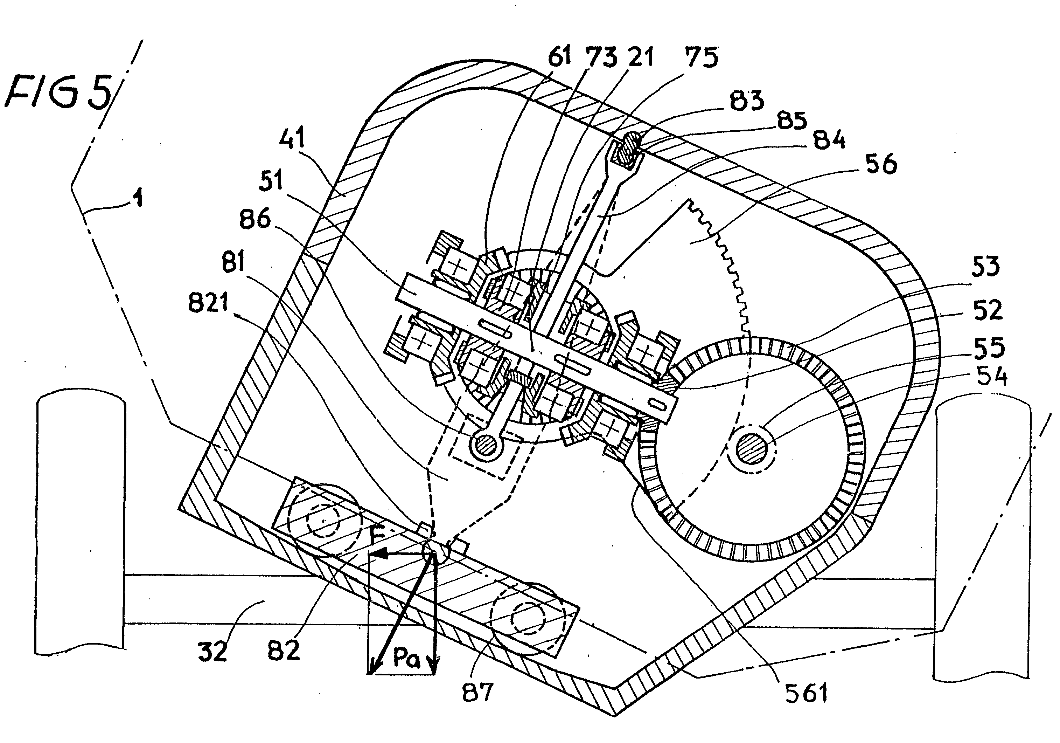

Le fonctionnement du dispositif se comprend facilement en se référant notamment aux figures 2 et 5.

Sur la figure 2 on a représenté le dispositif en ligne droite, le plan médian B-B du châssis étant perpendiculaire à l'axe de l'essieu 32. Lors d'une entrée en courbe, la masse pendulaire 82 subit un effort latéral F dû à la force centrifuge qui, sur la figure, est dirigée vers la gauche. Le levier primaire 81 tourne autour de l'axe 83 et entraîne l'axe 85 qui à son tour commande une légère rotation du levier secondaire 84 dans le sens de l'effort latéral F. Le levier 84 commande alors le déplacement de l'embrayage 73 placé du même côté et celui-ci commande progressivement l'embrayage de l'arbre 51 sur le pignon correspondant 61 entraîné en rotation par l'arbre 22.

Par l'intermédiaire du système de démultiplication constitué par l'ensemble des pignons 52, 53, la rotation de l'arbre 51 dans le sens du pignon 61 commande la rotation du pignon 55 par rapport au secteur denté fixe 56 et par conséquent le basculement de la caisse 1 dans le sens permettant de ramener le plan médian de celle-ci dans la direction de la verticale apparente qui passe par le centre de gravité de la masse pendulaire. Le levier secondaire 84 revient progressivement dans le plan de symétrie de l'arbre 51 et commande donc le débrayage progressif du plateau 73. Grâce à l'effet des embrayages, le basculement de la caisse et son maintien selon l'inclinaison de la verticale apparente peut donc être obtenu immédiatement et sans à-coup.

Si le véhicule est arrêté et que le moteur tourne, le dispositif ramène automatiquement la caisse du véhicule à la verticale si elle était inclinée, par exemple lorsque l'arrêt s'est produit dans une courbe.

Lorsque le moteur est arrêté, toute inclinaison de la caisse provoque un déplacement de la masse pendulaire 82 et par conséquent l'embrayage de l'accouplement correspondant qui tend à provoquer la rotation de l'arbre moteur en sens inverse de son sens de rotation normal. Compte tenu du rapport de démultiplication élevé, le couple de renversement exercé par la caisse se traduit par un couple très faible sur l'arbre moteur 22 et ce couple ne sera en général pas susceptible de faire tourner le moteur à l'envers. Toutefois, si cette condition risquait de ne pas être réalisée, on pourrait placer sur l'arbre moteur 22 une roue libre anti-dévireuse 910 prenant appui sur la caisse et qui empêcherait la rotation de l'arbre 22 en sens inverse du sens normal.

Le mouvement d'inclinaison de la caisse doit évidemment être limité. Dans ce but, la masse pendulaire 82 est munie d'un téton 821. Deux butées, fixes par rapport au train roulant et symétriques par rapport au plan vertical passant par l'axe d'articulation, peuvent être prévues pour limiter les mouvements de la masse 82. L'une de ces butées peut être constituée par le pan inférieur 561 du secteur denté fixe 56, l'autre butée, non représentée, étant alors constituée par un butoir symétrique solidaire de ce secteur. Ces butées agissent sur la masse 82 pour la ramener dans le plan passant par les axes 83 et 86 et limiter son action sur les embrayages et par conséquent sur l'inclinaison de la caisse.

Bien entendu, l'invention peut faire l'objet de variantes ou de perfectionnements de détail. Dans certains cas, par exemple, on peut souhaiter que le dispositif soit irréversible. Le réducteur entre l'arbre de commande 51 et le pignon 53 pourrait alors être du type à vis tangente par exemple. L'axe d'articulation du levier double 84 pourrait également être monté sur excentrique pour faciliter les réglages.

En outre, dans le mode de réalisation qui vient d'être décrit, on utilise une solution entièrement mécanique. Cependant, des réalisations magnétiques et hydrauliques pourraient également être utilisées.

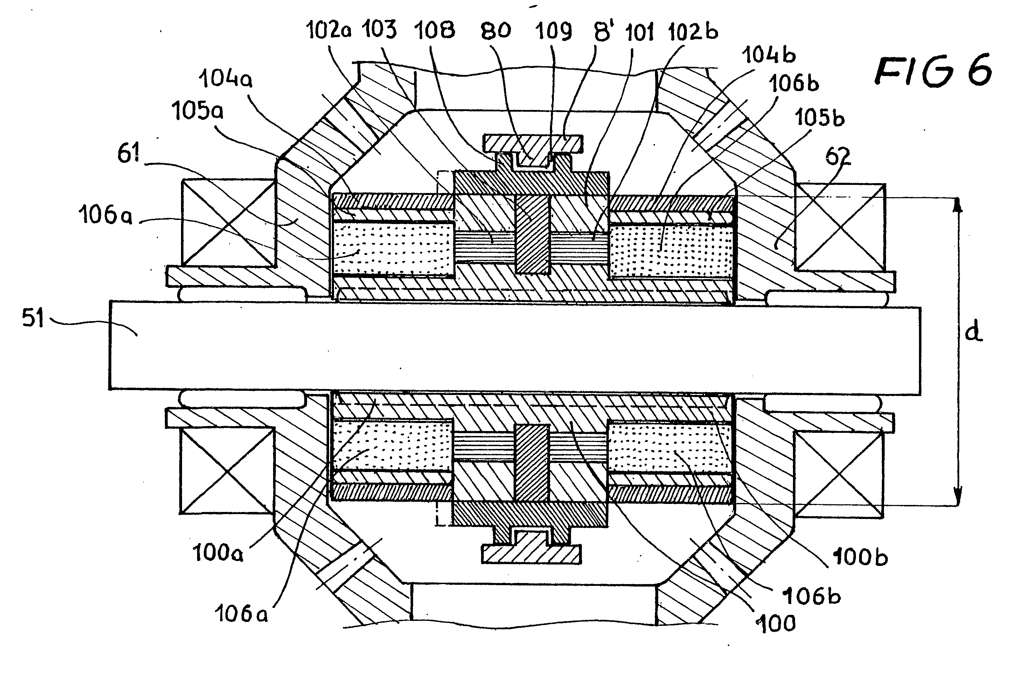

Sur la figure 6, on a représenté, à titre d'exemple, une réalisation magnétique du type à aimant permanent.

Dans cette réalisation, l'arbre secondaire 51, aux extrémités duquel sont montés également les deux pignons 61 et 62 entraînés par l'arbre moteur, est entouré par un manchon 100 en métal non magnétique, cuivreux par exemple, qui est placé entre les deux pignons 61 et 62 et qui est lié en rotation à l'arbre 51 par des cannelures. Dans sa partie centrale, le manchon 100 comprend une partie élargie 101 de diamètre extérieur d, qui est séparée en deux par une rondelle 103 en métal magnétique placée dans le plan de symétrie. De plus, des aimants permanents 102a, 102b sont insérés dans la partie centrale 101, de part et d'autre de la rondelle 103.

Les deux parties de moindre diamètre 100a, 100b du manchon sont entourées chacune par une bague cylindrique constituée d'une paroi extérieure 104 en métal magnétique accolée à une paroi intérieure 105 en métal non magnétique. Les faces externes des parois extérieures 104a, 104b ont pour diamètre d et se trouvent donc placées dans le prolongement de la face externe de la partie centrale 101 du manchon. Les faces internes des parois intérieures 105a, 105b sont écartées des faces en regard des parties 100a et 100b du manchon et ménagent ainsi deux cavités annulaires 106a, 106b, qui sont remplies d'une poudre de fer doux en suspension dans l'huile. Des dispositifs d'étanchéité non représentés sur la figure sont placés le long des faces planes en contact avec les engrenages, les pièces cylindriques et le manchon qui peuvent donc avoir des mouvements de rotation les uns par rapport aux autres.

Sur la partie centrale de grand diamètre 101 du manchon et les pièces cylindriques 104a, 104b, qui ont le même diamètre extérieur, peut coulisser à frottement très doux une bague 108 en métal magnétique munie dans sa partie centrale d'une rainure annulaire 109, dans laquelle s'engagent des ergots 80 ménagés sur deux branches 8' d'un levier encadrant l'ensemble et dont le déplacement vers la droite ou vers la gauche peut être commandé par la masse pendulaire d'une façon analogue à celle qui a été décrite précédemment. Selon une variante, la bague 108 pourrait avoir un poids suffisant pour constituer elle-même la masse pendulaire.

La bague 108 a une largeur égale à l'épaisseur de la partie 101 élargie du manchon de telle sorte que, lorsque le système est en équilibre, le levier 8' étant dans le plan médian du manchon, les faces planes de la bague 108 sont arasées au droit des faces planes de la partie 101 à grand diamètre du manchon.

On a ainsi constitué un embrayage à poudre dont le fonctionnement est connu. Si, en se référant à la figure 6, la masse pendulaire déplace le levier 8' par exemple d'un côté ou de l'autre du plan médian, le levier 8' entraîne la bague 108 qui recouvre progressivement l'une des deux bagues placées de part et d'autre de la partie centrale, par exemple la bague 104a si le levier est déplacé vers la gauche. Les lignes de force des aimants 102a peuvent se refermer par l'engrenage 61, la partie extérieure 104a de la pièce cylindrique, la bague 108 et la rondelle 103. La poudre de fer de la cavité 106a est alors magnétisée et devient pâteuse, entraînant ainsi le manchon 100 en rotation dans le même sens que l'engrenage 61 qui peut entraîner progressivement en rotation l'arbre 51 grâce aux cannelures solidarisant le manchon et l'arbre.

L'arbre 51 commande alors, comme on l'a indiqué précédemment, une inclinaison de la caisse tendant à ramener le plan médian de celle-ci sur le centre de gravité de la masse pendulaire. Le levier 8' revient progressivement vers la droite jusqu'à se placer, en position d'équilibre, dans le plan de symétrie de l'embrayage. Les lignes de force ne peuvent plus se refermer et aucun couple par conséquent n'est transmis entre l'engrenage et l'arbre 51.

L'utilisation d'un embrayage à poudre permet d'obtenir un mouvement de basculement particulièrement progressif et sans à-coup.

On pourrait également imaginer des dispositifs dans lesquels la liaison entre l'arbre 51 et les engrenages 61, 62 serait assurée par de petits coupleurs hydrauliques ou des plateaux à courants de Foucault, dispositifs bien connus eux-mêmes. Cependant, de tels dispositifs, présentent par rapport à ceux qui viennent d'être décrits l'inconvénient d'être purement dynamique et de ne donner aucun couple résistant à l'arrêt, exigeant ainsi des moyens complémentaires qui peuvent compliquer le dispositif.

Mais l'invention peut également donner lieu à d'autres perfectionnements.

Par exemple, si l'avantage principal de l'invention réside dans le fait que le mouvement d'inclinaison de la caisse pour la ramener dans le plan de la verticale apparente est indépendant du conducteur, on peut cependant désirer que le conducteur ait la possibilité d'agir lui-même sur l'inclinaison. Dans ce but, on pourra interposer une seconde roue libre 92 entre l'arbre moteur 22 et l'engrenage 63 de manière que ce dernier puisse tourner plus vite que l'arbre 22 mais non l'inverse. De la sorte, le conducteur pourrait redresser son véhicule lui-même si, par exemple, la caisse se trouvait inclinée à l'arrêt, le moteur ayant été stoppé avant que le système ait eu le temps de redresser la caisse. De même, le conducteur aurait la possibilité d'anticiper légèrement l'action de la force centrifuge provoquant le mouvement d'inclinaison de la caisse à l'arrivée dans une courbe ce qui diminuerait encore le temps de réponse.

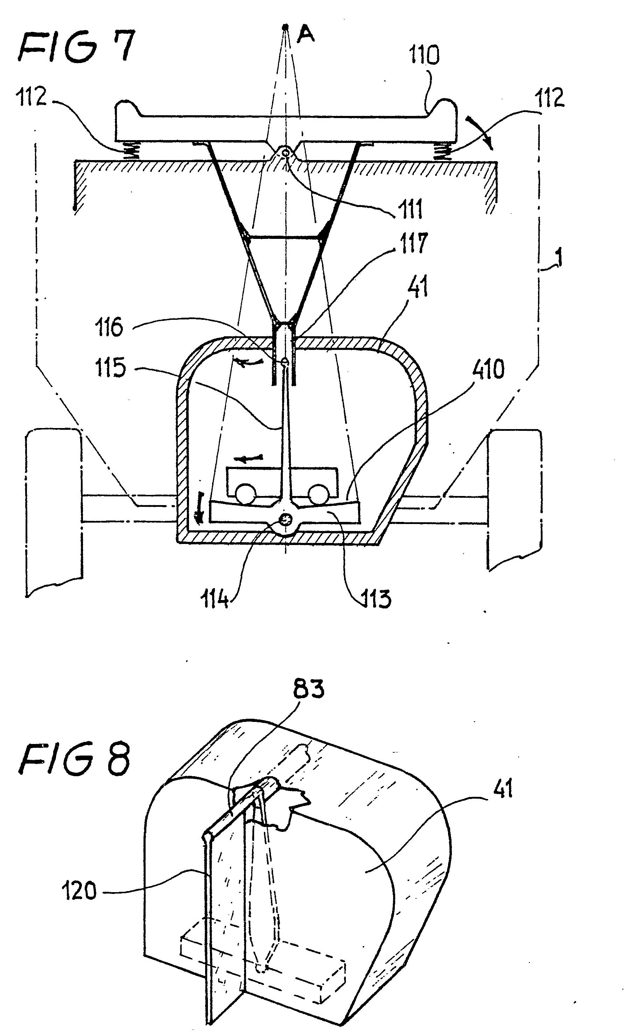

Cependant, cette anticipation sera obtenue avantageusement au moyen du dispositif perfectionné représenté sur la figure 7.

En effet, le corps humain présente sur n'importe quel servo-mécanisme l'avantage de pouvoir prévoir le mouvement et l'invention ainsi perfectionnée parmet d'utiliser cette possibilité.

Dans ce but, le dispositif pendulaire de commande de l'inclinaison est agencé de façon à répercuter sur le pendule l'action exercée par le conducteur en déplaçant son centre de gravité, ce qui est la façon usuelle de conduire un véhicule à deux roues.

Selon l'invention, le conducteur a la possibilité de commander l'écartement de la masse pendulaire d'un côté ou de l'autre du plan médian avant que celle-ci ne soit soumise à l'effet de la force centrifuge.

Dans le mode de réalisation préférentiel représenté sur la figure 7, le conducteur détermine un écartement de l'axe d'oscillation de la masse pendulaire du côté du plan médian vers lequel doit s'exercer par la suite la force centrifuge.

A cet effet, le siège 110 du conducteur est articulé autour d'un axe horizontal 111 placé dans le plan médian du véhicule et il est suspendu par des moyens élastiques 112 qui permettent la rotation du siège 110 autour de son axe 111 lorsque le conducteur déplace son centre de gravité.

Cette rotation du siège 110 détermine un écartement en sens inverse de l'axe d'oscillation de la masse pendulaire. Lorsque celle-ci est constituée par un pendule, l'axe d'oscillation de celui-ci peut être suspendu à une pièce solidaire du siège 110. Cependant, on a vu que généralement, pour augmenter le rayon du pendule, son axe d'oscillation est fictif, la masse pendulaire 82 pouvant se déplacer sur une surface cylindrique 410 de grand rayon.

Selon le perfectionnement de la figure 7, la surface cylindrique 410 est ménagée sur un plateau 113 qui peut basculer légèrement par rapport au fond du carter 41 autour d'un axe d'articulation 114. Le plateau 113 est solidaire d'un bras 115 s'étendant vers le haut à partir de l'axe 114 perpendiculairement au plateau et muni à son extrémité supérieure d'un téton d'articulation 116 qui s'engage dans une fourchette 117 solidaire du siège 110 du conducteur. On voit que l'inclinaison du siège dans un sens ou dans l'autre, par exemple vers la droite provoque l'inclinaison du plateau 113 et par conséquent le déplacement de l'axe fictif de l'articulation dans le sens opposé, c'est-à-dire vers la gauche, ce qui agit sur la masse pendulaire comme le ferait une force centrifuge dirigée vers la gauche. Comme le mouvement naturel du conducteur est d'incliner son corps vers l'intérieur de la courbe à l'approche de celle-ci, ce mouvement provoquera donc par anticipation le déplacement de la masse pendulaire vers l'extérieur avant que la force centrifuge ne se soit manifestée. Ce déplacement de la masse pendulaire détermine l'inclinaison de la caisse dans le sens qui a été provoqué à l'avance par le conducteur, ce qui correspond d'ailleurs à un mode de conduite naturel avec les véhicules à deux roues.

On peut éventuellement réaliser un blocage du siège soit automatiquement lorsque la vitesse descend en dessous d'une limite donnée au moyen d'un système automatique réalisant également le blocage de l'articulation, comme on l'a décrit dans le brevet déjà cité, soit, à l'arrêt par un dispositif relié au frein à main.

L'invention peut être encore perfectionnée par un dispositif agissant directement sur la masse pendulaire par exemple pour corriger l'effet du vent latéral qui pourrait être néfaste sur un véhicule léger. Un tel dispositif représenté schématiquement sur la figure 8 peut être constitué très simplement par une plaque 120 formant girouette fixée à l'extérieur du carter 41 sur un prolongement de l'axe 83 du levier 81. Un courant d'air latéral d'une certaine importance agissant, par l'intermédiaire de la plaque 120 sur l'orientation du levier 81 agit comme la masse pendulaire 82 et d'une façon d'ailleurs contrôlée par cette masse pour provoquer une réaction d'inclinaison du véhicule en sens inverse du vent latéral.

On notera que l'utilisation simultanée d'une action directe sur le levier primaire par le vent et sur l'axe d'oscillation par le conducteur rend ces deux actions absolument indépendantes l'une de l'autre et, par conséquent, cumulatives, ce qui est évidemment souhaitable.

Bien entendu, l'invention ne se limite pas aux détails des modes de réalisation qui n'ont été décrits qu'à titre d'exemples et qui pourraient donner lieu à d'autres perfectionnements ou à d'autres variantes en utilisant notamment des moyens équivalents.

D'autre part, si l'invention s'applique essentiellement aux véhicules légers à trois roues, elle pourrait également trouver une application dans les véhicules plus importants pour lesquels il peut être également intéressant de commander l'inclinaison du véhicule directement par la masse pendulaire et à partir d'un arbre moteur entraîné par l'énergie cinétique du moteur ou du véhicule lui-même.

## Revendications

1. Dispositif de commande et de contrôle de l'inclinaison de la caisse (1) d'un véhicule muni de moyens de déplacement et comportant au moins un train roulant (32) articulé sur la caisse du véhicule autour d'un axe horizontal (21) placé dans le plan médian de la caisse (1), de telle sorte que celle-ci puisse basculer d'un côté ou de l'autre du plan vertical passant par l'axe pour compenser l'effet de la force centrifuge dans les virages, une masse pendulaire (82) étant montée oscillante autour d'un axe sur la caisse (1) pour contrôler le maintien du plan médian de la caisse selon la verticale apparente passant par l'axe d'oscillation et le centre de gravité de la masse pendulaire (82), caractérisé par le fait qu'il comprend des moyens de basculement et de maintien de l'inclinaison de la caisse commandés par un arbre moteur (22) entraîné en rotation par les moyens de déplacement du véhicule et comprenant un mécanisme de basculement (56) susceptible d'être entraîné dans deux sens opposés par ledit arbre moteur (22) au moyen de l'un ou l'autre de deux moyens d'accouplement (71-72) à embrayage progressif (73-74) pour la commande de basculement chacun dans un sens, et un moyen (8) de commande de l'embrayage progressif de l'un ou l'autre desdits moyens d'accouplement (71-72) sous l'action de la masse pendulaire (82), l'écartement de celle-ci, d'un côté ou de l'autre du plan passant par son axe d'oscillation et parallèle au plan médian de la caisse commandant l'embrayage progressif de celui des deux moyens d'accouplement (71-72) déterminant le basculement de la caisse dans le sens permettant de ramener le plan médian de celle-ci dans la direction de la verticale apparente.

2. Le dispositif de commande d'inclinaison selon la revendication 1 caractérisé par le fait que l'arbre moteur (22) est relié au mécanisme de basculement (56) par l'intermédiaire d'un moyen de démultiplication (52-53).

3. Dispositif de commande d'inclinaison selon l'une des revendications 1 et 2, caractérisé par le fait que le mécanisme de basculement (56) est relié à l'arbre moteur (22) par l'intermédiaire d'un arbre secondaire d'entraînement (51) sur lequel sont calés les deux moyens d'accouplement à embrayage progressif (71-72), ces derniers entraînant l'arbre secondaire (51) dans deux sens de rotation opposés qui correspondent chacun à un sens de basculement.

4. Dispositif de commande d'inclinaison selon l'une des revendications précédentes, caractérisé par le fait que l'arbre moteur (22) est entraîné par le moteur de déplacement du véhicule.

5. Dispositif de commande d'inclinaison selon l'une des revendications 1-2-3 caractérisé par le fait que l'arbre moteur (22) est entraîné par l'énergie cinétique du véhicule transmise à partir du train roulant (32).

6. Dispositif de commande d'inclinaison selon l'une quelconque des revendications précédentes, caractérisé par le fait que le mécanisme de basculement comprend un secteur denté (56) centré sur l'axe d'articulation (21) et solidaire du train roulant (31-32), ledit secteur (56) étant ouvert d'un angle supérieur au double de l'angle maximum d'inclinaison de la caisse et engrenant dans son plan de symétrie avec un pignon (55) porté par un axe (54) solidaire de la caisse (1) et susceptible d'être entraîné dans les deux sens de rotation par l'arbre moteur (22).

7. Dispositif de commande d'inclinaison selon l'ensemble des revendications 2 et 6 caractérisé par le fait que le moyen de démultiplication se compose d'un ensemble d'engrenages (53) en prise d'une part avec le pignon (55) s'appuyant sur le secteur denté et d'autre part avec un pignon (52) calé sur l'arbre secondaire d'entraînement (51).

8. Dispositif de commande d'inclinaison selon la revendication 3, caractérisé par le fait que les deux moyens d'accouplement à embrayage progressif (71-72) comprennent deux pignons (61-62) montés fous sur l'arbre secondaire d'entraînement (51), ce dernier étant perpendiculaire au plan médian, lesdits pignons (61-62) étant entraînés en rotation dans des sens opposés par l'arbre moteur (22) et coopérant chacun avec l'embrayage (73-74) calé sur l'arbre secondaire (51) et susceptible d'être solidarisé en rotation avec le pignon (61-62) correspondant.

9. Dispositif de commande d'inclinaison selon l'une des revendications précédentes, caractérisé par le fait que le moyen de commande (8) de l'embrayage progressif des moyens d'accouplement (71-72) comprend un levier primaire (81) articulé à une extrémité sur la masse pendulaire (82) au centre de gravité de celle-ci et à l'autre extrémité sur un axe (83) solidaire de la caisse (1) et placé à la verticale dudit centre de gravité lorsque la masse pendulaire (82) est au repos, ledit levier primaire (81) commandant l'embrayage de l'un ou de l'autre des moyens d'accouplement (71-72) par l'intermédiaire d'un système multiplicateur d'effort.

10. Dispositif de commande d'inclinaison selon l'ensemble des revendications 8 et 9, caractérisé par le fait que le système multiplicateur d'effort comprend un levier secondaire (84) aligné en position de repos avec le levier primaire (81) articulé sur la masse pendulaire (82), et articulé à ses deux extrémités, respectivement, sur un axe (86) porté par la caisse du côté de la masse (82) et sur un axe (85) porté par le levier primaire (81) du côté de l'axe d'articulation (83) dudit levier primaire (81), le levier secondaire (84) passant entre les deux embrayages (73-74) et ceux-ci étant placés entre les pignons fous (61-62) de part et d'autre du plan de symétrie du mécanisme, ledit levier secondaire (84) déterminant, par appui d'un côté ou de l'autre, un effort d'embrayage proportionnel à l'écartement de la masse pendulaire (82) du même côté à partir de sa position de repos.

11. Dispositif de commande d'inclinaison selon l'ensemble des revendications 8-9-10, caractérisé par le fait que chaque embrayage comprend un plateau (73-74) solidaire en rotation de l'arbre secondaire (51) et susceptible de se déplacer axialement le long dudit arbre aux extrémités duquel sont placés les deux pignons fous (61-62) entraînés en rotation par l'arbre moteur (22), chaque plateau (73-74) coopérant avec une garniture d'embrayage ménagée sur le pignon correspondant, lesdits plateaux (73-74) étant séparés par un espace dans lequel passe le levier secondaire (84) et présentant vers l'intérieur deux faces inclinées (75-76) formant un V, le levier secondaire (84) étant constitué de deux branches encadrant l'arbre secondaire (51) et sur lesquelles sont montées coulissantes deux masselottes d'appui (89) susceptibles de venir s'appliquer entre lesdites faces en V (75-76) de façon à constituer un système à rattrapage de jeux.

12. Dispositif de commande d'inclinaison selon la revendication 8, caractérisé par le fait que les deux pignons (61-62) sont reliés en rotation à l'arbre secondaire par deux embrayages magnétiques à poudre (106a, 106b), placés entre lesdits pignons (61-62) de part et d'autre de la partie centrale élargie (101) d'un manchon (100) en métal amagnétique enfilé sur l'arbre secondaire (51) et entraîné en rotation par celui-ci et dans laquelle sont insérés des aimants permanents (102a, 102b) de part et d'autre d'une rondelle centrale (103) en métal magnétique qui coupe ladite partie centrale (101) en deux parties symétriques, chaque embrayage comprenant une cavité annulaire (106a, 106b) remplie de poudre de métal magnétique, limitée transversalement par le voile du pignon correspondant (61-62) et par la paroi transversale de la partie centrale (101) du manchon et radialement vers l'intérieur par une paroi cylindrique (100a, 100b) prolongeant la partie centrale (101) du manchon jusqu'au pignon (61-62) et vers l'extérieur par une bague cylindrique constituée d'une paroi interne (105a, 105b) en métal amagnétique recouverte d'une paroi externe (104a, 104b) en métal magnétique, dont la face cylindrique externe a un diamètre égal à celui de la paroi latérale cylindrique de la partie centrale (101) du manchon (100), ladite face latérale étant recouverte par une bague (109) en métal magnétique susceptible de coulisser à frottement doux sous l'action de la force centrifuge sur les faces externes de la partie centrale (101) du manchon et des parois extérieures magnétiques (104a, 104b) des deux bagues limitant les deux cavités annulaires (106a, 106b), ladite bague magnétique (109) recouvrant exactement, en position de repos, la partie centrale élargie (101) du manchon de telle sorte que ses faces transversales soient arasées dans le prolongement de celles de la partie élargie (101) et ladite bague (109) pouvant, sous l'action de la force centrifuge, recouvrir plus ou moins la paroi magnétique (104a, 104b) de l'embrayage placé du côté vers lequel s'exerce la force centrifuge sans dépasser le plan de la rondelle centrale magnétique (103) de façon à permettre la fermeture des lignes de forces et par conséquent l'embrayage progressif du pignon correspondant (61, 62).

13. Dispositif de commande d'inclinaison selon l'une des revendications précédentes, caractérisé par le fait qu'il comprend un moyen (115) de commande anticipée de l'écartement de la masse pendulaire (82) d'un côté ou de l'autre du plan médian, susceptible d'être actionné par le conducteur du véhicule avant que la masse pendulaire soit soumise à l'effet de la force centrifuge.

14. Dispositif de commande d'inclinaison selon la revendication 13, caractérisé par le fait que le moyen (115) de commande anticipée détermine un écartement de l'axe d'oscillation de la masse pendulaire (82) du côté du plan médian vers lequel doit s'exercer par la suite la force centrifuge.

15. Dispositif de commande d'inclinaison selon l'une des revendications 13 et 14, caractérisé par le fait que le moyen de commande anticipée (115) est actionné par le siège (110) du conducteur du véhicule, ledit siège (110) étant suspendu de façon articulée autour d'un axe horizontal longitudinal (111), ledit moyen de commande (115) déterminant l'écartement de la masse pendulaire (82) d'un côté du plan médian chaque fois que le conducteur incline son siège du côté opposé.

16. Dispositif de commande d'inclinaison selon l'une des revendications 13, 14, 15, caractérisé par le fait que le masse pendulaire (82) est susceptible de rouler sur une cuvette cylindrique (410) ayant un axe horizontal parallèle au plan médian et ménagée sur une pièce (113) articulée autour d'un axe parallèle (114) placé dans le plan vertical passant par l'axe de la cuvette et à proximité de celle-ci et que le moyen de commande anticipée (115) détermine une inclinaison de ladite cuvette articulée (410) vers le côté opposé à celui vers lequel s'est incliné le siège.

17. Dispositif de commande d'inclinaison selon la revendication 9 caractérisé par le fait qu'il comprend un dispositif de correction du vent latéral constitué d'une plaque (120) formant girouette placée à l'extérieur et solidaire en rotation du levier primaire (81) de commande de l'embrayage des moyens d'accouplement (71, 72).

## Claims

1. A device for governing and control of the angle of bank of the body (1) of a vehicle equipped with means of movement and including at least one wheeled base (32) articulated onto the body of the vehicle about a horizontal axis (21) located in the central plane of the body (1) so that the latter can tilt to one side or the other of the vertical plane passing through the axis in order to compensate the effect of centrifugal force in cornering, a pendular mass (82) being mounted to oscillate about an axis on the body (1) in order to control the keeping of the central plane of the body along the apparent vertical passing through the axis of oscillation and the centre of gravity of the pendular mass (82), characterized by the fact that it comprises means of tilting and of maintaining the angle of bank of the body, governed by a driving shaft (22) driven in rotation by the means of movement of the vehicle and comprising a tilting mechanism (56) capable of being driven in two opposite directions by the said driving shaft (22) by means of one or other of two means of coupling (71-72) having progressive clutching (73-74) for governing the tilting each in one direction, and a means (8) of governing the progressive clutching of one or other of the said means of coupling (71-72) under the action of the pendular mass (82), the deviation of the latter to one side or the other of the plane passing through its axis of oscillation and parallel with the central plane of the body, governing the progressive clutching of that one the two means of coupling (71-72), wich determines the tilting of the body in the sense which enables the central plane of the latter to be brought back into the direction of the apparent vertical.

2. A device for governing the angle of bank as in Claim 1, characterized by the fact that the driving shaft (22) is connected to the tilting mechanism (56) by way of means of gearing down (52-53).

3. A device for governing the angle of bank as in one of the Claims 1 and 2, characterized by the fact that the tilting mechanism (56) is connected to the driving shaft (51) onto which are keyed the two coupling means having progressive clutching (71-72), the latter driving the secondary shaft (51) in two opposite directions of rotation which correspond each with one direction of tilt.

4. A device for governing the angle of bank as in one of the preceding Claims, characterized by the fact that the driving shaft (22) is driven by the engine which drives the vehicle.

5. A device for governing the angle of bank as in one of the Claims 1-2-3, characterized by the fact that the driving shaft (22) is driven by the kinetic energy of the vehicle transmitted from the wheeled base (32).

6. A device for governing the angle of bank as in any one of the preceding Claims, characterized by the fact that the tilting mechanism comprises a toothed segment (56) centred upon the axis of articulation (21) and integral with the wheeled base (31-32), the said segment (56) subtending an angle greater than twice the maximum angle of bank of the body and meshing in its plane of symmetry with a pinion (55) carried by a shaft (54) integral with the body (1) and capable of being driven in both directions of rotation by the driving shaft (22).

7. A device for governing the angle of bank as in the whole of Claims 2 and 6, characterized by the fact that the means of gearing down is composed of a set of gears (53) in mesh firstly with the pinion (55) bearing against the toothed segment and secondly with a pinion (52) keyed onto the secondary driving shaft (51).

8. A device for governing the angle of bank as in Claim 3, characterized by the fact that the two coupling means having progressive clutching (71-72) comprise two pinions (61-62) mounted freely on the secondary driving shaft (51) which is perpendicular to the central plane, the said pinions (61-62) being driven in rotation in opposite senses by the driving shaft (22) and cooperating each with the clutch (73-74) keyed onto the secondary shaft (51) and capable of being locked in rotation with the corresponding pinion (61-62).

9. A device for governing the angle of bank as in one of the preceding Claims, characterized by the fact that the means (8) of governing the progressive clutching of the coupling means (71-72) comprises a primary lever (81) articulated at one end onto the pendular mass (82) at the centre of gravity of the latter and at the other end onto a pin (83) integral with the body (1) and located on the vertical through the said centre of gravity when the pendular mass (82) is at rest, the said primary lever (81) governing the clutching of one or other of the coupling means (71-72) by way of a forcemultiplying system.

10. A device for governing the angle of bank as in the whole of Claims 8 and 9, characterized by the fact that the force-multiplying system comprises a secondary lever (84) aligned in the rest position with the primary lever (81) articulated onto the pendular mass (82), and articulated at its two ends respectively onto a pin (86) carried by the body next to the mass (82) and onto a pin (85) carried by the primary lever (81) next the axis of articulation (83) of the said primary lever (81), the secondary lever (84) passing between the two clutches (73-74) and the latter being located between the free pinions (61-62) on opposite sides of the plane of symmetry of the mechanism, the said secondary lever (84) by bearing to one side or the other, causing a clutching force proportional to the deviation of the pendular mass (82) towards the same side from its position of rest.

11. A device for governing the angle of bank as in the whole of Claims 8-9-10, characterized by the fact that each clutch comprises a plate (73-74) locked in rotation to the secondary shaft (51) and capable of being moved axially along the said shaft at the ends of which are located the two free pinions (61-62) driven in rotation by the driving shaft (22), each plate (73-74) cooperating with a clutch lining arranged on the corresponding pinion, the said plates (73-74) being separated by a gap through which passes the secondary lever (84) and exhibiting towards the inside two inclined faces (75-76) forming a V, the secondary lever (84) consisting of two arms which straddle the secondary shaft (51) and upon which are mounted two sliding bearing-blocks (89) capable of being applied between the said V-faces (75-76) so as to form a system for taking up play.

12. A device for governing the angle of bank as in Claim 8, characterized by the fact that the two pinions (61-62) are connected in rotation to the secondary shaft by two magnetic-powder clutches (106a, 106b) placed between the said pinions (61-62) on opposite sides of the enlarged central portion (101) of a sleeve (100) of magnetic metal threaded onto the secondary shaft (51) and driven in rotation by it, permanent magnets (102a, 102b) being inserted into the central portion (101) on opposite sides of central ring (103) of magnetic metal which cuts the said central portion (101) into two symmetrical parts, each clutch comprising an annular cavity (106a, 106b) for the fill of magnetic metal powder, bounded transverseley by the hub of the corresponding pinion (61, 62) and by the crosswall of the central portion (101) of the sleeve (100) and radially towards the inside by a cylindrical wall (100a, 100b) prolonging the central portion (101) of the sleeve as far as the pinion (61-62) and towards the outside by a cylindrical ring consisting of an inner wall (105a, 105b) of non-magnetic metal covered over by an outer wall (104a, 104b) of magnetic metal, the outer cylindrical face of which has a diameter equal to that of the cylindrical wall to the side of the central portion (101) of the sleeve (100), the said face at the side being covered over by a ring (109) of magnetic metal capable of sliding with and easy fit under the action of the centrifugal force against the outer faces of the central portion (101) of the sleeve and of the outer magnetic walls (104a, 104b) of the two rings bounding the two annular cavities (106a, 106b), the said magnetic ring (109) in its position of rest, exactly covering the enlarged central portion (101) of the sleeve so that its transverse faces are made flush with the prolongation of those of the enlarged portion (101) and the said ring (109) under the action of the centrifugal force being able to cover over to a greater or less degree the magnetic wall (104a, 104b) of the clutch located at the side towards which the centrifugal force is being exerted, without going beyond the plane of the central magnetic ring (103) so as to enable closure of the lines of force and consequently progressive clutching of the corresponding pinion (61, 62).

13. A device for governing the angle of bank as in one of the preceding Claims, characterized by the fact that it comprises a means (115) of anticipated governing of the deviation of the pendular mass (82) to one side or the other of the central plane, capable of being actuated by the driver of the vehicle before the pendular mass is subjected to the effect of the centrifugal force.

14. A device for governing the angle of bank as in Claim 13, characterized by the fact that the means (115) of anticipated governing causes a deviation of the axis of oscillation of the pendular mass (82) to the side of the central plane towards which the centrifugal force must eventually be exerted.

15. A device for governing the angle of bank as in one of the Claims 13 and 14, characterized by the fact that the means of anticipated governing (115) is actuated by the seat (110) of the driver of the vehicle, the said seat (110) being suspended in an articulated fashion about a longitudinal horizontal axis (111), the said means of governing (115) causing the deviation of the pendular mass (82) to one side of the central plane everytime the driver tilts his seat to the opposite side.

16. A device for governing the angle of bank as in one of the Claims 13, 14, 15, characterized by the fact that the pendular mass (82) is capable of running along a cylindrical tray (410) having a horizontal axis parallel with the central plane and arranged on a part (113) hinged about a parallel axis (114) located in the vertical plane passing through the axis of the tray and near to it, and that the means of anticipated governing (115) causes a tilting of the said hinged tray (410) towards the side opposite to that towards which the seat has been tilted.

17. A device for governing the angle of bank as in Claim 9, characterized by the fact that it comprises a device for correction for sidewind, consisting of a plate (120) forming a wind vane located outside and locked in rotation to the primary lever (81) for governing the clutching of the coupling means (71, 72).

## Ansprüche

1. Steuer- und Kontrollvorrichtung für die Neigung des Kastens (1) eines Fahrzeugs mit Fahrmitteln und mindestens einem Laufwerk (32), das am Fahrzeugkasten um eine in der Mittelebene des Kastens (1) angeordneten, waagerechten Achse (21) angelenkt ist, so dass der Kasten auf die eine oder andere Seite der durch die Achse gehenden Längsebene kippen kann, um die Wirkung der Zentrifugalkraft in den Kurven auszugleichen, wobei eine Pendelmasse (82) schwenkbar um eine Achse auf dem Kasten (1) montiert ist, um die Beibehaltung der Kastenmittelebene nach der durch die Schwenkachse und den Schwerpunkt der Pendelmasse (82) gehenden, scheinbaren Vertikalen zu steuern, dadurch gekennzeichnet, dass die Vorrichtung Mittel zum Kippen und zur Neigungsbeibehaltung des Kastens umfasst, die durch eine von den Fahrzeug-Fahrmitteln drehangetriebene Antriebswelle (22) gesteuert werden, die einen Kipp-Mechanismus (56) aufweist, der durch die genannte Antriebswelle (22) in zwei entgegengesetzte Richtungen angetrieben werden kann mittels des einen oder anderen der bei den Kupplungsmittel (71-72) mit progressivem Einkuppeln (73-74) für die Steuerung der Kippbewegung in jeweils eine Richtung, sowie ein Steuermittel (8) für das progressive Einkuppeln des einen oder anderen der genannten Kupplungsmittel (71-72) unter Einwirkung der Pendelmasse (82), wobei deren Abstand von der einen oder anderen Seite der durch ihre Schwenkachse gehenden und zur Kasten-Mittelebene parallelen Ebene das progressive Einkuppeln dieses der beiden Kupplungsmittel (71-72) steuert, welches das Kippen des Kastens in der Richtung bestimmt, in der die Kasten-Mittelebene in die Richtung der scheinbaren Vertikalen zurückgebracht wird.

2. Neigungs-Steuervorrichtung nach Anspruch 1 dadurch gekennzeichnet, dass die Antriebswelle (22) über ein Untersetzungsmittel (52-53) mit dem Kippmechanismus (56) verbunden ist.

3. Neigungssteuervorrichtung nach einem der Ansprüche 1 und 2, dadurch gekennzeichnet, dass der Kippmechanismus (56) mit der Antriebswelle (22) über eine Nebenantriebswelle (51) verbunden ist, auf der die beiden Kupplungsmittel mit progressiver Einkupplung (71-72) festgekeilt sind, wobei diese Kupplungsmittel die Nebenwelle (51) in zwei entgegengesetzte, jeweils einer Kipprichtung entsprechende Drehrichtungen antreiben.

4. Neigungssteuervorrichtung nach einem der vorgenannten Ansprüche, dadurch gekennzeichnet, dass die Antriebswelle (22) durch den Fahrzeugmotor angetrieben wird.

5. Neigungssteuervorrichtung nach einem der Ansprüche 1-2-3, dadurch gekennzeichnet, dass die Antriebswelle (22) durch die vom Fahrwerk (32) übertragene Bewegungsenergie des Fahrzeugs angetrieben wird.

6. Neigungssteuervorrichtung nach irgendeinem der vorgenannten Ansprüche, dadurch gekennzeichnet, dass der Kippmechanismus ein auf die Drehachse ausgerichtetes und mit dem Fahrwerk (31-32) formschlüssig verbundenes Zahnsegment (56) aufweist, das mit einem grösseren Winkel als der doppelte maximale Kastenneigungswinkel geöffnet ist und in der Symmetrieebene mit einem Ritzel (55) eingreift, das von einer Achse (54) getragen wird, die mit dem Kasten (1) formschlüssig verbunden ist und durch die Antriebswelle (22) in beide Drehrichtungen angetrieben werden kann.

7. Neigungssteuervorrichtung nach den Ansprüchen 2 und 6 insgesamt, dadurch gekennzeichnet, dass sich das Untersetzungsmittel aus einer Getriebeanordnung (53) zusammensetzt, die einerseits mit dem sich auf das Zahnsegment stützenden Ritzel (55) und andererseits mit einem auf der Nebenantriebswelle (51) festgekeilten Ritzel (52) eingreift.

8. Neigungssteuervorrichtung nach Anspruch 3 dadurch gekennzeichnet, dass die beiden Kupplungsmittel mit progressiver Einkupplung (71-72) zwei Ritzel (61-62) aufweisen, die frei auf der senkrecht zur Mittelebene verlaufende Nebenantriebswelle angeordnet sind und dass die genannten Ritzel (61-62) in entgegengesetzten Richtungen von der Antriebswelle (22) drehangetrieben werden und jeweils mit der Kupplung (73-74) zusammenarbeiten, die auf der Nebenantriebswelle (51) festgekeilt ist und mit dem entsprechenden Ritzel (61-62) drehfestgestellt werden kann.

9. Neigungssteuervorrichtung nach einem der vorgenannten Ansprüche dadurch gekennzeichnet, dass das Steuermittel (8) für die progressive Einkupplung der Kupplungsmittel (71-72) einen Primärhebel (81) umfasst, der an einem Ende an der Pendelmasse (82) in deren Schwerpunkt und am anderen Ende an einer Achse (83) angelenkt ist, die mit dem Kasten (1) formschlüssig verbunden und zum genannten Schwerpunkt senkrecht angeordnet ist, wenn die Pendelmasse (82) sich in Ruhestellung befindet, wobei der genannte Primärhebel (81) die Einkupplung des einen oder anderen Kupplungsmittels (71-72) über ein Kraftvervielfachungssystem steuert.

10. Neigungssteuervorrichtung nach den Ansprüchen 8 und 9 insgesamt dadurch gekennzeichnet, dass das Kraftvervielfachungssystem einen in Ruhestellung mit dem an der Pendelmasse (82) angelenkten Primärhebel (81) ausgerichteten Sekundärhebel (84) umfasst, der an seinen Enden jeweils an einer von dem Kasten auf der Seite der Pendelmasse (82) getragenen Achse (86) und an einer vom Primärhebel (81) auf der Seite der Drehachse (83) des genannten Primärhebels (81) getragenen Achse (85) angelenkt ist, wobei der Sekundärhebel (84) zwischen den beiden Kupplungen (73-74) verläuft und diese zwischen den beweglichen Ritzeln (61-62) zu beiden Seiten der Symmetrieebene des Mechanismus angeordnet sind, wobei der genannte Sekundärhebel (84) durch Druck auf die eine oder andere Seite eine zum Abstand der Pendelmasse (82) auf der gleichen Seite proportionale Kupplungskraft von der Ruhestellung ausgehend bestimmt.

11. Neigungssteuervorrichtung nach den Ansprüchen 8-9-10 insgesamt, dadurch gekennzeichnet, dass jede Kupplung eine bei der Drehbewegung mit der Nebenantriebswelle (51) formschlüssig verbundene Scheibe (73-74) aufweist, die sich axial längs der genannten Welle bewegen kann, an deren Enden die beiden beweglichen Ritzel (61-62) angeordnet sind, die durch die Antriebswelle (22) drehangetrieben werden, wobei jede Scheibe (73-74) mit einem auf dem entsprechenden Ritzel vorgesehenen Kupplungsbelag zusammenarbeitet und die genannten Scheiben (73-74) durch einen Zwischenraum getrennt werden, durch den der Sekundärhebel (84) geht, und nach innen hin zwei ein V bildende schräge Flächen (75-76) aufweisen, wobei der Sekundärhebel (84) aus den beiden die Nebenantriebswelle (51) umgebenden Zweigen besteht, auf die zwei Druckansätze (89) verschiebbar montiert sind, die sich zwischen den genannten V-förmigen Flächen (75-76) so anlegen können, dass sie eine Spiel-Nachstellvorrichtung bilden.

12. Neigungssteuervorrichtung nach Anspruch 8 dadurch gekennzeichnet, dass die beiden Ritzel (61-62) mit der Nebenantriebswelle durch zwei Magnetpulverkupplungen (106a, 106b) drehverbunden sind, die zwischen den genannten Ritzeln (61-62) zu beiden Seiten des verbreiterten Mittelteils (101) einer Muffe (100) aus nichtmagnetischem Metall angeordnet sind, die auf die Nebenantriebswelle (51) aufgesteckt ist, durch diese drehangetrieben wird und in welche Dauermagneten (102a und 102b) zu beiden Seiten einer Mittelscheibe (103) aus nichtmagnetischem Metall eingefügt sind, die den genannten Mittelteil (101) in zwei symmetrische Teile teilt, wobei jede Kupplung eine ringförmige Vertiefung (106a, 106b) aufweist, die mit Magnetpulver gefüllt ist, quer durch den Körper des entsprechenden Ritzels (61-62) sowie durch die Querwand des Mittelteils (101) der Muffe (100), radial nach innen durch eine den Mittelteil (101) der Muffe bis zum Ritzel (61-62) verlängernde, zylindrische Wand (100a, 100b) und nach aussen durch einen zylindrischen Ring begrenzt wird, der aus einer Innenwand (105a, 105b) aus nichtmagnetischem Metall besteht, die von einer Aussenwand (104a, 104b) aus magnetischem Metall überzogen wird, deren zylindrische Aussenfläche den gleichen Durchmesser hat wie die zylindrische Seitenwand des Mittelteils (101) der Muffe (100), wobei die genannte Seitenwand mit einem Ring (109) aus magnetischem Metall überzogen ist, der mit leichter Reibung verschiebbar ist unter Einwirkung der Zentrifugalkraft auf die Aussenflächen des Muffen-Mittelteils (101) und auf die magnetischen Aussenwände (104a, 104b) der die beiden ringförmigen Vertiefungen (106a, 106b) begrenzenden Ringe, wobei der genannte Magnetring (109) in Ruhestellung genau den verbreiterten Mittelteil (101) der Muffe so bedeckt, dass ihre Querflächen sich auf gleicher Höhe befinden wie die Verlängerung der Querflächen des verbreiterten Teils (101) und der genannte Ring (109) unter Einwirkung der Zentrifugalkraft mehr oder weniger die Magnetwand (104a, 104b) der Kupplung bedecken kann, die sich auf der Seite befindet, auf der die Zentrifugalkraft wirkt, ohne dass jedoch dabei die Ebene der magnetischen Mittelscheibe (103) überschritten wird, so dass die Kraftlinien abgeschlossen werden können und infolgedessen das progressive Einkuppeln des entsprechenden Ritzels (61-62) ermöglicht wird.

13. Neigungssteuervorrichtung nach einem der vorgenannten Ansprüche dadurch gekennzeichnet, dass sie ein Mittel (115) zur Vorsteuerung des Abstands der Pendelmasse (82) von der einen oder anderen Seite der Mittelebene aufweist, das vom Fahrzeug-Fahrer betätigt werden kann, bevor die Zentrifugalkraft auf die Pendelmasse einwirkt.

14. Neigungssteuervorrichtung nach Anspruch 13 dadurch gekennzeichnet, dass das Vorsteuermittel (115) den Abstand der Schwenkachse der Pendelmasse (82) von der Seite der Mittelebene bestimmt, nach der anschliessend die Zentrifugalkraft wirken soll.

15. Neigungssteuervorrichtung nach einem der Ansprüche 13 und 14 dadurch gekennzeichnet, dass das Vorsteuermittel (115) durch den Sitz (110) des Fahrzeugfahrers betätigt wird, wobei der genannte Sitz (110) schwenkbar um eine horizontale Längsachse (111) aufgehängt ist und das genannte Steuermittel (115) den Abstand der Pendelmasse (82) von einer Seite der Mittelebene jedes Mal bestimmt, wenn der Fahrer seinen Sitz auf die entgegengesetzte Seite neigt.

16. Neigungssteuervorrichtung nach einem der Ansprüche 13, 14, 15 dadurch gekennzeichnet, dass die Pendelmasse (82) auf einer zylindrischen Schale (410) rollen kann, deren Querachse parallel zur Mittelebene verläuft und die auf einem Teil (113) angeordnet ist, das um eine Parallelachse (114) schwenkbar montiert ist, die in der durch die Schalenachse gehenden Längsebene und in der Nähe der Schale verläuft, und dass das Vorsteuermittel (115) eine Neigung der genannten schwenkbaren Schale auf die Seite bestimmt, die der Seite, nach der sich der Sitz neigt, entgegengesetzt ist.

17. Neigungssteuervorrichtung nach Anspruch 9 dadurch gekennzeichnet, dass sie ein Mittel zur Seitenwindkorrektur aufweist, das aus einer einen Windrichtungsanzeiger bildenden Platte (120) besteht, die aussen angeordnet ist und mit dem Primärhebel (81) für die Steuerung der Kupplungsmittel (71, 72) drehfest verbunden ist.

FIG1

FIG 2

FIG 3

FIG 4

0 004 230

FIG 5

FIG 6

102a 103 108 80 109 8' 101 102b
104a
105a
104b
106b
105b
61
62
106a
51
d
100a
106a
100b
106b
100

0 004 230

FIG 7

FIG 8